# EUROPEAN PATENT SPECIFICATION

(11) **EP 3 305 846 B1**
(45) Date of publication and mention of the grant of the patent: **24.07.2019**
(21) Application number: 16799981.2
(22) Date of filing: 23.05.2016
(51) Int. Cl.: C08L 27/16, C08J 5/18, C08L 101/12, C08L 51/00, C08F 265/06

(54) **RESIN COMPOSITION AND FILM COMPRISING RESIN COMPOSITION**
HARZZUSAMMENSETZUNG UND FILM MIT DER HARZZUSAMMENSETZUNG
COMPOSITION DE RÉSINE ET FILM COMPRENANT LA COMPOSITION DE RÉSINE

(30) Priority: 27.05.2015 JP 2015106986
(43) Date of publication of application: 11.04.2018
(73) Proprietor: Mitsubishi Chemical Corporation, Tokyo 100-8251 (JP)
(72) Inventor: IKAWA Masashi, Tokyo 1008251 (JP); OKAMOTO Eiko, Tokyo 1008251 (JP); HOSOKAWA Hiroshi, Tokyo 1008251 (JP)
(74) Representative: Ter Meer Steinmeister & Partner
(86) International application number: PCT/JP2016/065164
(87) International publication number: WO 2016/190276

(56) References cited:
- JP-A- S6 470 549
- JP-A- H04 246 451
- JP-A- S63 308 055
- JP-A- 2001 001 478
- JP-A- 2008 133 452
- JP-A- 2010 155 953
- JP-A- 2015 513 322
- US-A1- 2013 316 234
- US-A1- 2015 010 743
- US-B1- 7 144 952

## Description

### TECHNICAL FIELD

The present invention relates to a resin composition and a film comprising a resin composition.

### BACKGROUND ART

Fluororesins are crystalline resins that demonstrate superior performance in terms of weather resistance, flame resistance, heat resistance, fouling resistance, soiling resistance, smoothness and chemical resistance, and are sought after as materials of articles exposed to outdoor environments in particular. Polyvinylidene fluoride (PVDF) resins are thermoplastic resins suitable for molding that have a large difference between the melting point and decomposition temperature thereof. However, PVDF crystals easily grow to a larger size than the wavelength of visible light, and have low transparency as a result of the large crystals scattering a portion of visible light. Consequently, it has been difficult to apply these resins to transparent materials.

On the other hand, acrylic resins, as represented by polymethyl methacrylate (PMMA), are amorphous resins that are compatible with polyvinylidene fluoride resins. They are sought after as materials of articles exposed to outdoor atmospheres due to their superior transparency and weather resistance. However, their applications are limited due to the inferior heat resistance and low water absorbency, flexibility and impact resistance thereof.

Considerable research has been conducted on incorporating the respective advantages of polyvinylidene fluoride resins and acrylic resins by polymer blending utilizing the compatibility thereof.

For example, a film that demonstrates high heat resistance and retains the crystallinity of polyvinylidene fluoride resins despite being transparent can be fabricated if a polyvinylidene fluoride resin is mixed with an acrylic resin that is highly compatible therewith at a prescribed ratio as in Patent Document 1. However, in the examples described in this document, the excessively high elastic modulus of this film resulted in processing difficulties such as in the case of secondary processing of curved surfaces and the like. In addition, in the case of using as a laminate, whitening occurred during bending due to separation at the interface with the base material.

In addition, there are examples of modifying the mechanical properties of crystalline resins using an ABC triblock polymer having a block chain of an acrylic resin that is compatible with polyvinylidene fluoride resin as in Patent Document 2. Example 1 of Patent Document 2 describes to the effect that appearance becomes transparent as a result of mixing a triblock polymer with polyvinylidene fluoride resin. However, the matrix thereof is clearly described as being a mixture of blocks of PVDF and PMMA based on the results of observing morphology with a transmission electron microscope, and it can be easily reasoned by analogy by a person with ordinary skill in the art that the transparency is the result of a decrease in the degree of crystallization. In other words, this is not an example of realizing both high crystallinity and high transparency as a result of reducing crystal grain size. Example 7 of Patent Document 3 discloses a resin composition containing a polyvinylidene fluoride homopolymer and a macromonomer copolymer prepared from a macromonomer only composed of methacrylate monomer units and acrylic acid. Said resin composition can be applied to extrusion products such as film or sheet.

Example 4 of Patent Document 4 discloses the preparation of optically clear films comprising a resin composition that comprises a polyvinylidene fluoride and a block copolymer PnBA / PMMA.

### Prior Art Documents

### Patent Documents

Patent Document 1: International Publication No. WO 2011/142453
Patent Document 2: Published Japanese Translation No. 2001-525474 of PCT International Publication
Patent Document 3: US Publication No. US 2013/316234
Patent Document 4: US Publication No. US 2015/010743

### DISCLOSURE OF THE INVENTION

### Problems to be Solved by the Invention

An object of the present invention is to provide a resin composition that is useful in the production of flexible films having both crystallinity and high transparency as well as superior tear strength, and a flexible film, which has both crystallinity and high transparency as well as superior tear strength.

### Means for Solving the Problems

The aforementioned object is achieved by inventions [1] to [15] of the present invention indicated below.
[1] A resin composition containing 15% by weight to 80% by weight of the following polymer X and 20% by weight to 85% by weight of the following polymer Y based on the total weight of polymers contained in the resin composition:
   polymer X: polyvinylidene fluoride resin; and,
   polymer Y: copolymer having a domain (y1) compatible with the polymer X and a domain (y2) incompatible with the polymer X, and having a molecular weight distribution of 3.0 to 16.0,
   wherein the weight average molecular weight of the polymer Y determined by gel permeation chromatography as polymethyl methacrylate is 50,000 to 750,000, wherein the polymer (Y) is only composed of a (meth)acrylate monomer unit.
[2] The resin composition described in [1] wherein the domain (y1) or the domain (y2) contains a macromonomer unit.
[3] The resin composition described in any of [1] to [2], wherein the molecular weight distribution of the polymer Y is 3.0 to 11.0.
[4] The resin composition described in any of [1] to [3], wherein the polymer X is polyvinylidene fluoride.
[5] A film comprising the resin composition described in any of [1] to [4].
[6] The film described in [5], wherein the haze value thereof is 0% to 10%.
[7] The film described in [5] or [6], wherein the elastic modulus measured at 23°C and a testing speed of 20 mm/min is 1 MPa to 1600 MPa.
[8] The film described in [7], wherein the elastic modulus measured at 23°C and a testing speed of 20 mm/min is 1 MPa to 1300 MPa.
[9] The film described in any of [5] to [7], wherein the tear strength measured at a testing speed of 200 mm/min in accordance with JIS K7128-3 is 70 N/mm or more.
[10] The film described in [9], wherein the tear strength measured at a testing speed of 200 mm/min in accordance with JIS K7128-3 is 80 N/mm or more.
[11] A film comprising a resin composition, which satisfies the following (1) to (4):
   (1) elastic modulus measured at 23°C and a testing speed of 20 mm/min is 1 MPa to 1300 MPa;
   (2) tear strength measured at a testing speed of 200 mm/min in accordance with JIS K7128-3 is 70 N/mm or more;
   (3) haze value measured in accordance with JIS K7136 is 0% to 10%; and,
   (4) resin composition contains 20% by weight or more of a polymer composed of a (meth)acrylate monomer unit.
[15] The film described in [14] comprising a resin composition containing 40% by weight or more of a polymer composed of a (meth)acrylate monomer unit.

### Effects of the Invention

The resin composition of the present invention is useful since it can be used to produce a flexible film having both crystallinity and high transparency as well as superior tear strength.

The flexible film of the present invention is useful since it has both crystallinity and high transparency as well as superior tear strength.

### MODE FOR CARRYING OUT THE INVENTION

The resin composition of the present invention contains 15% by weight to 80% by weight of the following polymer X and 20% by weight to 85% by weight of the following polymer Y based on the total weight of polymers contained in the resin composition:
polymer X: polyvinylidene fluoride resin; and,
polymer Y: polymer having a domain (y1) compatible with polymer X and a domain (y2) incompatible with the polymer X, and having a molecular weight distribution of 3.0 to 16.0.

### <Polymer X>

The polymer X used in the present invention is a polyvinylidene fluoride resin. Examples of polyvinylidene fluoride resins include homopolymers of vinylidene fluoride and copolymers containing 70% by weight or more of a vinylidene fluoride unit in the polyvinylidene fluoride resin. Polyvinylidene fluoride resins demonstrate favorable crystallinity the higher the content of the vinylidene fluoride unit, thereby making them preferable.

In the case the polymer X is a copolymer, examples of monomers copolymerized with vinylidene fluoride to produce the polymer X include hexafluoropropylene and tetrafluoroethylene.

A known polymerization method such as suspension polymerization or emulsion polymerization can be used to produce the polyvinylidene fluoride resin used for the polymer X.

In addition, a polyvinylidene fluoride resin having a high crystalline melting point is preferable for the polymer X. Polyvinylidene fluoride is more preferable. Furthermore, in the present invention, crystalline melting point refers to the melt peak temperature when measured in compliance with the method described in JIS-K7121,(3).2.

The crystalline melting point of the polymer X is preferably 150°C or higher and more preferably 160°C or higher. The upper limit of the crystalline melting point is about 170°C, equal to the crystalline melting point of polyvinylidene fluoride.

The weight average molecular weight (g/mol) of the polymer X is preferably 50,000 to 600,000 and more preferably 100,000 to 500,000 in order to obtain melt viscosity suitable for molding.

In the present invention, weight average molecular weight refers to the value measured using gel permeation chromatography (GPC), and the value used is determined as the molecular weight as polymethyl methacrylate using a solvent such as tetrahydrofuran or water for the eluent.

One type of the polymer X may be used alone or two or more types may be used in combination.

Specific industrially available examples of polymer X include Kynar 720, Kynar 710 and Kynar 740 manufactured by Arkema Inc. , KF850 manufactured by Kureha Corp., and Solef 6008 and Solef 6010 manufactured by Solvay Specialty Polymers Japan K.K.

### <Polymer Y>

The polymer Y used in the present invention has a domain (y1) compatible with the polymer X (to be referred to as "domain (y1)" and a domain (y2) incompatible with the polymer X (to be referred to as "domain (y2)").

In the present invention, compatibility between a compound A and a compound B refers to the observation of a single glass transition temperature (Tg) not derived from either of the compound A or compound B in a molded body obtained by blending and molding the compound A and the compound B. In addition, incompatibility between a compound A and a compound B refers to the observation of Tg values derived from only compound A and compound B in a molded body obtained by blending the compound A and the compound B.

Furthermore, a molded body refers to that which imparts a desired shape after having melted a resin composition and is subsequently cooled and solidified in the case of, for example, a thermoplastic resin composition.

In the present invention, a "domain" refers to one phase that composes a phase-separated structure . In the case a molded body obtained by blending different types of polymers adopts a phase-separated structure, Tg values are observed that are derived from each domain.

However, caution is required since, in the case each of the Tg values derived from different domains is in close proximity, the respective values of Tg may be observed as if to demonstrate a single Tg despite the compounds being incompatible.

Although the polymer Y may be any polymer provided it forms the domain (y1) and the domain (y2), examples thereof include copolymers obtained by polymerizing macromonomers (to be referred to as "macromonomer copolymers"), graft copolymers, block polymers (such as diblock polymers or triblock polymers), and mixtures thereof. Macromonomer copolymers obtained by polymerization using macromonomers are preferable from the viewpoint of productivity.

In the present invention, a macromonomer refers to a high molecular weight compound having a copolymerizable functional group.

Although subsequently described in detail, the method used to synthesize the macromonomer is preferably catalytic chain transfer polymerization (CCTP) from the viewpoints of double bond introduction rate and ease of synthesis.

In the case the polymer Y is a macromonomer copolymer, the domain (y1) or the domain (y2) contains a unit. Namely, the domain (y1) or the domain (y2) preferably contains a macromonomer unit. In particular, the domain (y1) preferably contains a macromonomer unit from the viewpoints of domain size of the domain (y1) to be subsequently described and being able to easily prepare a phase-separated structure of the polymer Y.

One type of macromonomer may be used alone or two or more types may be used in combination. The polymer Y is only composed of a (meth) acrylate monomer unit.

The polymer Y preferably undergoes phase separation when molded alone. When the polymer Y and the polymer X are blended, the polymer X is only compatible with domain (y1), and when cooled, crystallization proceeds in the vicinity of domain (y1).

A smaller domain size is preferable for the phase-separated structure of a molded body of the polymer Y. A smaller domain size facilitates a reduction in crystal size making it possible to realize both crystallinity and transparency. Moreover, there is also less likelihood of a decrease in optical performance attributable to a difference in refractive indices between phase domains. The size of each domain is preferably 500 nm or less, more preferably 300 nm or less and even more preferably 100 nm or less. If the domain size is 500 nm or less, there is less likelihood of scattering of light at wavelengths of the visible region, thereby allowing the obtaining of high transparency. The lower limit of the size of each domain is about 20 nm. Furthermore, the size of each domain refers to the length of the island phase in the lengthwise direction in the case of a sea-island structure, or the shortest distance between the interface between domains and the interface closest thereto in the case of a co-continuous structure and/or lamellar structure. Domain size refers to the average value obtained by fabricating an observation piece having a thickness of 20 nm to 200 nm from a molded body, observing with a transmission electron microscope, and measuring the size of five arbitrary domains.

There are no particular limitations on the phase-separated structure of a molded body molded with polymer Y alone, and examples thereof include a sea-island structure, cylinder structure, co-continuous structure and lamellar structure. Properties of the molded body are influenced by the phase-separated structure after having blended with polymer X.

The weight average molecular weight (g/mol) of the polymer Y is preferably 50,000 to 750,000. If the weight average molecular weight is 50,000 or more, the molded body is able to retain mechanical strength, while if the weight average molecular weight is 750,000 or less, decreases in moldability attributable to decreases in fluidity can be prevented. Weight average molecular weight is more preferably 50,000 to 500,000 from the viewpoint of realizing both mechanical strength and moldability.

The molecular weight distribution (polydispersity index: PDI) of the polymer Y is 3.0 to 16.0. If the PDI is 3.0 or more, it becomes easier to secure favorable fluidity for molding as a result of containing low molecular weight compounds. PDI is preferably 3.2 or more and more preferably 3. 5 or more from the viewpoint of realizing both a suitable weight average molecular weight and fluidity.

If the PDI is 16.0 or lower, there is less susceptibility to the formation of structures having minute surface irregularities based on an uneven thermal relaxation rate during molding, thereby resulting in less likelihood of increased haze and poor appearance. PDI is preferably 12.0 or less and more preferably 11.0 or less.

PDI is preferably 3.2 to 12.0 and more preferably 3.5 to 11.0.

The polymer Y preferably contains 1% by weight to 50% by weight of the polymer that composes domain (y1) based on 100% by weight of the polymer Y. Containing 1% by weight to 50% by weight of the polymer that composes domain (y1) facilitates partial compatibility of the polymer Y with the polymer X.

Since crystallization of the polymer X proceeds in the vicinity of domain (y1), crystal grain size of the polymer X is easily reduced due to spatial restrictions of the phase-separated structure.

If the content of the polymer that composes domain (y1) in the polymer Y is 1% by weight or more, partial compatibility occurs easily between the polymer X and polymer Y.

In addition, if the content of the polymer that composes domain (y1) in the polymer Y is 50% by weight or less, the phase composed of the polymer X and domain (y1) easily adopts an island or a co-continuous phase-separated structure in a molded body molded after blending the polymer X and the polymer Y. As a result, crystal grain size of the polymer X is easily reduced.

The polymer Y preferably contains 50% by weight to 99% by weight of the polymer that composes the domain (y2) based on 100% by weight of the polymer Y. Containing the polymer that composes the domain (y2) at 50% by weight to 99% by weight enables the polymer Y to adopt a phase-separated structure even after having been blended with the polymer X.

If the content of the polymer that composes domain (y2) in the polymer Y is 50% by weight or more, the phase composed of the polymer X and domain (y1) easily adopts an island or a co-continuous phase-separated structure when the polymer X and the polymer Y have been blended. As a result, crystal grain size of the polymer X is easily reduced.

In addition, if the content of the polymer that composes domain (y2) in the polymer Y is 99% by weight or less, partial compatibility occurs easily between the polymer X and polymer Y.

In the present invention, the content of each domain can be calculated from the weight of the monomers that compose each domain.

The total content of the polymer that composes the domain (y1) and the polymer that composes the domain (y2) in the polymer Y is 100% by weight.

Domain (y1) is composed of a polymer compatible with polymer X, or a polymer compatible with polymer X and a polymer incompatible with polymer X.

An example of domain (y1) is that which contains 60% by weight to 100% by weight of a polymer compatible with the polymer X in 100% by weight of domain (y1). The content of a polymer compatible with polymer X in domain (y1) is preferably 70% by weight to 100% by weight, more preferably 80% by weight to 100% by weight, even more preferably 90% by weight to 100% by weight, and particularly preferably 100% by weight from the viewpoint of ensuring adequate compatibility with the polymer X.

Examples of monomers that compose the polymer compatible with polymer X include methyl (meth)acrylate, ethyl (meth) acrylate. In the present specification, "(meth)acrylate" refers to "acrylate" or "methacrylate".

Since polymers containing these monomer units demonstrate favorable compatibility with the polymer X, they are preferable for use as polymers that compose domain (y1). Among these, polymers containing a methyl methacrylate unit are preferable from the viewpoint of compatibility.

Domain (y1) may contain one type of the aforementioned monomers alone or may contain two or more types.

Examples of monomers that compose the polymer incompatible with the polymer X include alkyl (meth)acrylates such as n-propyl (meth)acrylate, i-propyl (meth)acrylate, n-butyl (meth)acrylate, i-butyl (meth)acrylate, t-butyl (meth)acrylate, n-pentyl (meth)acrylate, n-hexyl (meth)acrylate, cyclohexyl (meth)acrylate, n-octyl (meth)acrylate, 2-ethylhexyl (meth)acrylate, dodecyl (meth)acrylate, stearyl (meth)acrylate, isobornyl (meth)acrylate, 2-hydroxyethyl (meth)acrylate or benzyl (meth)acrylate; glycidyl group-containing monomers such as glycidyl (meth) acrylate.

For example, in the case domain (y1) contains a macromonomer unit, the macromonomer unit preferably contains a methyl methacrylate unit from the viewpoint of compatibility.

In addition, in the case the polymer Y is a block polymer, domain (y1) is preferably composed of a methyl methacrylate unit.

The molecular weight of the polymer that composes domain (y1) is preferably low from the viewpoint of promoting crystallization of the polymer X when the polymer X and polymer Y have been blended. The weight average molecular weight (g/mol) of the polymer that composes domain (y1) is preferably 5,000 to 50,000.

If the molecular weight of the polymer that composes domain (y1) is excessively low, compatibility between domain (y1) and domain (y2) increases resulting in the risk of preventing phase separation.

In addition, if the molecular weight of the polymer that composes domain (y1) is excessively high, entanglement with the polymer that composes domain (y1) increases, thereby resulting in the risk of inhibiting crystallization of the polymer X.

Although there are no particular limitations on the means used to form the polymer Y from domain (y1) and domain (y2), examples thereof include the following methods A and B from the viewpoint of being able to form the polymer Y by a simple process .

A: A macromonomer containing a monomer unit that composes a polymer that is compatible with polymer X is used for the monomer that composes domain (y1).

B: A macromonomer containing a monomer unit that is incompatible with the polymer X is used for the monomer that composes domain (y2).

The sizes of the domain (y1) and domain (y2) and the phase-separated structure of the polymer Y can be easily adjusted by using a macromonomer and controlling the molecular weight of the macromonomer.

In addition, a technique using a macromonomer is also preferable from the viewpoint of designing the polymer Y since the range of the PDI of the polymer Y can be easily expanded.

In the case of using a macromonomer for the monomer that composes domain (y1), the weight average molecular weight (g/mol) of the macromonomer is preferably 50,000 or less. If the weight average molecular weight of the macromonomer is 50,000 or less, the macromonomer easily dissolves in a solvent when polymerizing the polymer Y.

The weight average molecular weight of the macromonomer is preferably 5,000 or more. If the weight average molecular weight of the macromonomer is 5,000 or more, the process for introducing the macromonomer into the polymer Y is shortened, thereby preventing productivity from being impaired.

In the case of using a macromonomer for the monomer that composes the domain (y1), the macromonomer is preferably polymerized using as a main raw material thereof any of methyl (meth) acrylate or ethyl (meth)acrylate.

The main raw material referred to here indicates that contained at 60% by weight or more based on 100% by weight of the macromonomer. The macromonomer is preferably polymerized by using methyl methacrylate as the main raw material from the viewpoint of compatibility with the polymer X.

The domain (y2) is composed of a polymer compatible with the polymer X and a polymer incompatible with the polymer X or a polymer incompatible with the polymer X.

Examples of the domain (y2) include that which contains 50% by weight to 100% by weight of a polymer incompatible with the polymer X in 100% by weight of the polymer that composes domain (y2). The content of the polymer incompatible with the polymer X is preferably 60% by weight to 100% by weight, more preferably 70% by weight to 100% by weight, and even more preferably 80% by weight to 100% by weight from the viewpoint of ensuring adequate incompatibility with the polymer X.

Examples of polymers that compose domain (y2) include alkyl (meth)acrylates such as n-propyl (meth)acrylate, i-propyl (meth)acrylate, n-butyl (meth)acrylate, i-butyl (meth)acrylate, t-butyl (meth)acrylate, n-pentyl (meth)acrylate, n-hexyl (meth)acrylate, cyclohexyl (meth)acrylate, n-octyl (meth)acrylate, 2-ethylhexyl (meth)acrylate, dodecyl (meth)acrylate, stearyl (meth)acrylate, isobornyl (meth)acrylate, 2-hydroxyethyl (meth) acrylate or benzyl (meth) acrylate; glycidyl group-containing monomers such as glycidyl (meth) acrylate.

The polymer incompatible with the polymer X that composes domain (y2) may contain one type of the aforementioned monomers alone or two or more types.

The polymer incompatible with the polymer X that composes domain (y2) is particularly preferably a polymer composed of a (meth)acrylate monomer from the viewpoint of not impairing weather resistance of the resin composition.

Although the domain (y2) may also contain a polymer that is compatible with the polymer X, the domain (y1) and the domain (y2) are required to separate into phases. Consequently, the amount of the polymer compatible with the polymer X is preferably as low as possible, and the proportion of polymer compatible with polymer X in 100% by weight of the polymer that composes domain (y2) is preferably 0% by weight to less than 50% by weight, more preferably 0% by weight to 40% by weight, even more preferably 0% by weight to 20% by weight, particularly preferably 0% by weight to 10% by weight, and most preferably 0% by weight.

Examples of polymers compatible with polymer X contained in domain (y2) are the same as those listed as examples of polymers compatible with polymer X in domain (y1).

The monomer unit that composes the domain (y2) can be selected according to the objective. For example, in the case of desiring to impart flexibility to the resin composition of the present invention containing the polymer X and the polymer Y, a vinyl monomer unit having a low polymer Tg value in the manner of n-butylacrylate can be selected. In addition, in the case of desiring to impart heat resistance to the resin composition, a vinyl monomer unit having a high polymer Tg value can be selected.

In the case the domain (y2) contains a polymer compatible with the polymer X, the domain (y2) is preferably a random copolymer containing a monomer that forms a polymer incompatible with the polymer X and a monomer that forms a polymer compatible with the polymer X.

Examples of monomers able to be used to compose the domain (y2) include n-butyl acrylate for the monomer that forms a polymer incompatible with the polymer X and methyl methacrylate for the monomer that forms a polymer compatible with the polymer X.

### <Polymer Y Production Method>

The polymer Y has the domain (y1) and the domain (y2) as previously described.

A known method such as a living radical polymerization in the manner of atomic transfer radical polymerization (ATRP), anionic polymerization or polymerization using a macromonomer can be used to produce the polymer Y. Among these, a polymerization method using a macromonomer is preferable from the viewpoint of superior productivity in terms of such factors as the polymerization rate or number of steps, while suspension polymerization using a macromonomer is more preferable from the viewpoint of environmental friendliness since it does not require an organic solvent.

A commercially available product may be used for the macromonomer, and the macromonomer may be produced from a monomer according to a known method. Examples of methods used to produce macromonomers include a method that uses a cobalt chain transfer agent, a method that uses an α-substituted unsaturated compound such as α-bromomethyl styrene as a chain transfer agent, a method that chemically bonds polymerizable groups, and a method that uses thermal decomposition.

Although the following provides a detailed description of an example of a method for obtaining the polymer Y by suspension polymerization using a macromonomer as the monomer that composes the domain (y1), obtaining the polymer Y by another method does not constitute a deviation from the present invention.

Polymer Y is obtained by mixing a macromonomer serving as the monomer that composes domain (y1) with a monomer that composes the domain (y2) followed by carrying out polymerization by adding a radical polymerization initiator to the resulting mixture.

Heating is preferably carried out when mixing the monomer that composes domain (y1) with the monomer that composes domain (y2). A heating temperature of 30°C or higher facilitates dissolution of the macromonomer that composes domain (y1) in the monomer that composes domain (y2), while a heating temperature of 90°C or lower makes it possible to inhibit volatilization of the monomer mixture.

The lower limit of the heating temperature is preferably 35°C or higher. The upper limit of the heating temperature is preferably 75°C or lower. The heating temperature during mixing is preferably 30°C to 90°C and more preferably 35°C to 75°C.

The mixing time is, for example, 10 minutes to 1 hour.

When using a radical polymerization initiator in the production of the polymer Y, the radical polymerization initiator is preferably added after all of the monomers have been mixed. The point when all of the monomers have been mixed refers to a state in which the monomers have been adequately dispersed.

Although varying according to the radical polymerization initiator used, the temperature of the monomer mixture during addition of the radical polymerization initiator is preferably 0°C or higher, and a temperature 15°C or more lower than the characteristic 10 hour half-life temperature of the radical polymerization initiator is preferable. If the temperature during addition of the radical polymerization initiator is 0°C or higher, then the solubility of the radical polymerization initiator in the monomers is favorable. If the temperature during addition of the radical polymerization initiator is 15°C or more lower than the characteristic 10 hour half-life temperature of the radical polymerization initiator, polymerization can be carried out stably.

The temperature during addition of the radical polymerization initiator is 30°C to 50°C in the case, for example, 2,2'-azobis(2-methylbutyronitrile) (AMBN, 10 hour half-life temperature: 67°C) is used for the radical polymerization initiator. Furthermore, in the case of a commercially available radical polymerization initiator, the 10 hour half-life temperature is exclusively 30°C or higher, thereby eliminating any contradiction between "15°C or more lower than the 10 hour half-life temperature" and "0°C or higher".

Examples of radical polymerization initiators include organic peroxides and azo compounds.

Examples of organic peroxides include 2,4-dichlorobenzoyl peroxide, t-butylperoxypivalate, o-methylbenzoyl peroxide, bis-3,5,5-trimethylhexanoyl peroxide, octanoyl peroxide, t-butylperoxy-2-ethylhexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide and di-t-butyl peroxide.

Examples of azo compounds include 2,2'-azobisisobutyronitrile, 2,2'-azobis(2-methylbutyronitrile), 2,2'-azobis(2,4-dimethylvaleronitrile) and 2,2'-azobis(2,4-dimethyl-4-methoxyvaleronitrile) .

Among these, benzoyl peroxide, 2,2'-azobisisobutyronitrile, 2,2'-azobis(2-methylbutyronitrile), 2,2'-azobis(2,4-dimethylvaleronitrile) and 2,2'-azobis(2,4-dimethyl-4-methoxyvaleronitrile) are preferable from the viewpoint of availability.

One type of radical polymerization initiator may be used alone or two or more types may be used in combination.

The added amount of the radical polymerization initiator is preferably 0.001 parts by weight to 10 parts by weight based on a total of 100 parts by weight of the monomers from the viewpoint of controlling the heat of polymerization.

The polymerization temperature during suspension polymerization, namely the temperature during the polymerization reaction after having added the radical polymerization initiator to the monomer mixture, is 50°C to 120°C.

The polymer Y obtained according to a production method like that described above can be easily handled in the form of beads by drying after having collected from water by filtration.

### <Resin Composition>

The resin composition used in the present invention contains 15% by weight to 80% by weight of the polymer X and 20% by weight to 85% by weight of the polymer Y based on a total of 100% by weight of polymers contained in the resin composition. The polymer X crystallizes if the content of the polymer X is 15% by weight or more.

In addition, if the content of the polymer X is 80% by weight or less, a molded body molded using the polymer X has superior transparency. Superior transparency refers to that which indicates a haze value of 0% to 10% when the resin composition has been molded into a film having a thickness of 130 µm.

The total content of the polymer X and the polymer Y in the resin composition is preferably 80% by weight to 100% by weight, more preferably 90% by weight to 100% by weight, and even more preferably 100% by weight.

Furthermore, the total content of the polymer X and the polymer Y in the resin composition does not exceed 100% by weight.

In addition, the content of the polymer X is preferably 20% by weight to 69% by weight and more preferably 30% by weight to 65% by weight based on a value of 100% by weight for the total weight of polymers contained in the resin composition from the viewpoint of using the resin composition to produce a molded body having both high crystallinity and high transparency.

The resin composition demonstrates superior transparency if the content of the polymer Y is 20% by weight or more. In addition, the polymer X crystallizes if the content of the polymer Y is 85% by weight or less.

The content of the polymer Y is preferably 31% by weight to 80% by weight and more preferably 35% by weight to 70% by weight based on a value of 100% by weight for the total weight of polymers contained in the resin composition from the viewpoint of using the resin composition to produce a molded body that realizes both crystallinity and high transparency.

Crystallinity of the resin composition of the present invention can be evaluated based on the value of crystal melting enthalpy observed by differential thermal analysis. Crystallinity of a molded body obtained from the resin composition of the present invention is such that crystal melting enthalpy as measured with a differential scanning calorimeter is preferably within the range of 7 J/g to 35 J/g, more preferably within the range of 10 J/g to 32 J/g, and even more preferably within the range of 10 J/g to 29 J/g.

In a composition composed of a combination of a plurality of compatible polymers, the measured value of crystal melting enthalpy of a molded body is lower than the theoretical value obtained by multiplying the weight fraction of crystalline resin contained in the composition by the crystal melt enthalpy of the crystalline resin alone. This is the result of compatible polymer chains preventing crystallization of the crystalline resin.

However, the crystal melting enthalpy exhibited by the resin composition of the present invention surprisingly approaches the value obtained by multiplying the weight fraction of the polymer X in the resin composition by the crystal melting enthalpy of the polymer X alone. The resin composition of the present invention demonstrates a value that is almost equal to the calculated value in the case the amount of the polymer X is 40% by weight or more based on a value of 100% by weight for the total weight of polymers contained in the resin composition in particular. Here, almost equal refers to the value of crystal melting enthalpy not deviating by 10% or more from the calculated value.

Normally, although molded bodies using a polymer that demonstrates crystallinity are opaque due to the crystal size thereof being larger than visible light, in the case of using the resin composition used in the present invention, a molded body having crystallinity while demonstrating transparency is obtained due to the effect of reducing crystal grain size. Namely, a transparent material can be realized that incorporates the properties of crystalline resins.

Examples of the properties of crystalline resins include heat resistance, chemical resistance and lower water absorption. In addition, examples of properties of the polymer X able to be incorporated by a molded body using the resin composition of the present application include the aforementioned properties of crystalline resins along with flame resistance and weather resistance.

In this manner, the resin composition of the present invention provides a molded body having high crystallinity and transparency both easily and comparatively inexpensively.

The resin composition of the present invention can contain an additive as necessary within a range that does not impair the optical performance or mechanical properties of a molded body obtained using the resin composition. The lower the amount of additive added the better, and the content of additive is preferably 0 parts by weight to 20 parts by weight, more preferably 0 parts by weight to 10 parts by weight and even more preferably 0 parts by weight to 5 parts by weight based on 100 parts by weight of the resin composition.

Examples of additives include an ultraviolet absorber, photostabilizer, heat resistance stabilizer, anti-blocking agent such as synthetic silica or silicon resin powder, plasticizer, antibacterial agent, anti-mold agent, bluing agent and antistatic agent.

Examples of ultraviolet absorbers include benzoate-based compounds, benzophenone-based compounds, benzotriazole-based compounds, triazine-based compounds, salicylate-based compounds, acrylonitrile-based compounds, metal complex salt-based compounds, hindered amine-based compounds, and inorganic particles such as ultrafine titanium oxide particles having a particle diameter of 0.01 µm to 0.06 µm or ultrafine zinc oxide particles having a particle diameter of 0.01 µm to 0.04 µm. One type of these compounds may be used alone or two or more types may be used in combination.

Examples of photostabilizers include N-H type, N-CH₃ type, N-acyl type and N-OR type hindered amine-based and phenol-based photostabilizers.

Examples of heat resistance stabilizers include phenol-based, amine-based, sulfur-based and phosphorous-based antioxidants.

Polymers obtained by chemically bonding the aforementioned ultraviolet absorbers or antioxidants to the main chain or side chain that composes a polymer can also be used as an ultraviolet absorber or antioxidant.

A resin composition can be prepared by incorporating prescribed amounts of the aforementioned essential components along with optional components as desired by kneading with an ordinary kneader such as a roller, Banbury mixer, single-screw extruder or twin-screw extruder.

### <Film>

The film of the present invention is obtained by molding the resin composition of the present invention.

The film of the present invention has both high transparency and crystallinity and demonstrates superior tear strength. In addition, the film of the present invention also has superior flexibility and favorable followability. Moreover, it does not undergo whitening during bending or stretching.

The total light transmittance of the film of the present invention in the case of measuring in compliance with JIS K7361-1 is preferably 80% to 100%, more preferably 83% to 100% and even more preferably 85% to 100%. If the total light transmittance thereof is 80% or more, an adequate sense of transparency is obtained even in the case of a thick film.

The haze value of the film of the present invention in the case of measuring in compliance with JIS K7136 is preferably 0% to 10%, more preferably 0% to 8% and even more preferably 0% to 5%. If the haze value thereof is 10% or less, a sense of transparency with little clouding is obtained.

The transparency of a film normally increases as the thickness of the film decreases. On the other hand, it becomes easier to obtain a film having high mechanical strength the greater the thickness of the film. Consequently, the thickness of the film of the present invention is preferably 20 µm to 400 µm, more preferably 25 µm to 350 µm and even more preferably 30 µm to 300 µm.

In the present invention, film thickness refers to the average value of measured values obtained at three arbitrary locations in the direction perpendicular to the direction of flow during film deposition (namely, thickness direction (TD)).

The elastic modulus of the film of the present invention in the case of measuring at 23°C and testing speed of 20 mm/min with reference to JIS K7127 is preferably 1 MPa to 1600 MPa. If the elastic modulus thereof is 1 MPa or more, the resulting film can be handled as a film. If the elastic modulus is 1600 MPa or less, the film has superior followability and is preferable for application to curved surfaces. Furthermore, a flexible film in the present specification refers to a film having an elastic modulus of 1600 MPa or less.

Elastic modulus is more preferably 1 MPa to 1300 MPa, even more preferably 400 MPa to 1400 MPa and particularly preferably 600 MPa to 1300 MPa.

The rupture elongation of the film of the present invention in the case of measuring at 23°C and a testing speed of 20 mm/min with reference to JIS 7127 is preferably 100% to 300%. If the rupture elongation thereof is 100% or more, the film does not break easily even if stretched and demonstrates favorable handling such as closely adhering to curved surfaces. In addition, the film is also suitable for secondary processing such as stretching. Although a higher rupture elongation is preferable, rupture elongation is preferably 300% or less from the viewpoint of easily achieving a balance between elastic modulus and yield stress.

Tear strength of the film of the present invention in the case of measuring at 23°C and a testing speed of 200 mm/min in compliance with JIS K7128-3 is preferably 65 N/mm to 300 N/mm. Tear strength of 65 N/mm or more results in superior durability. Tear strength of 300 N/mm or less results in superior processability with respect to punching and the like.

Tear strength is more preferably 70 N/mm or more, more preferably 80 N/mm or more, particularly preferably 80 N/mm to 250 N/mm, and most preferably 85 N/mm to 200 N/mm from the viewpoints of durability and processability.

If crystallinity is excessively low, molded bodies of crystalline resin compositions are susceptible to increases in microcrystal enlargement and whitening of the molded body due to heating and changes over time. In addition, there is the risk of a decrease in impact resistance and other parameters if crystallinity is excessively high. Consequently, crystallinity of the film of the present invention is such that crystal melting enthalpy measured with a differential scanning calorimeter is preferably within the range of 7 J/g to 35 J/g. The film is resistant to whitening if crystal melting enthalpy is within this range.

Crystal melting enthalpy is preferably 10 J/g to 32 J/g and more preferably 10 J/g to 29 J/g from the viewpoint of preventing whitening.

### <Film Production Method>

The film of the present invention can be produced by melt-extruding a resin composition containing 15% by weight to 80% by weight of the polymer X and 20% by weight to 85% by weight of the polymer Y based on 100% by weight of polymers contained in the resin composition, followed by forming the resulting melt extrudate into a film by contacting with at least one cooling roller having a surface temperature of 30°C to 75°C, preferably 40°C to 60°C and more preferably 40°C to 50°C. Examples of melt extrusion methods include the T-die method and inflation method, and the T-die method is preferable from the viewpoint of economy. The melt extrusion temperature is preferably about 170°C to 240°C. In addition, examples of extruders used include a single-screw extruder and twin-screw extruder.

In the present description, a cooling roller refers to a roller that enables the temperature of the surface thereof to be adjusted using a refrigerant. A melt extrudate that has been discharged from the T-die contacts the cooling roller and is cooled to the surface temperature of the cooling roller. The cooling roller may be in the form of, for example, a metal mirrored surface contact roller or metal endless belt. A single cooling roller or a plurality of cooling rollers may be used. A film may be formed by clamping the melt extrudate between two cooling rollers.

The set temperature of the T-die in the case of producing a film according to the T-die method is preferably 260°C or lower, more preferably 250°C or lower and even more preferably 240°C or lower from the viewpoint of inhibiting polymer decomposition.

In addition, the set temperature of the T-die is preferably 170°C or higher, more preferably 180°C or higher and even more preferably 190°C or higher from the viewpoint of ensuring moldable fluidity.

The set temperature of the T-die is preferably 170°C to 260°C, more preferably 180°C to 250°C and even more preferably 190°C to 240°C.

The opening gap between the lips of the T-die in the case of producing a film according to the T-die method is preferably 0.2 mm or more, more preferably 0.4 mm or more and even more preferably 0.6 mm or more since this allows the obtaining of a film having low arithmetic average roughness and low heat shrinkage. In addition, the T-die lip opening is preferably 1 mm or less, more preferably 0.8 mm or less and even more preferably 0.6 mm or less since this allows the obtaining of a film having small fluctuations in film thickness in the direction of width.

The T-die lip opening is preferably 0.2 mm to 1 mm, more preferably 0.4 mm to 0.8 mm, and even more preferably 0.6 mm.

The rotating speed of the cooling roller (also referred to as the film take-up speed) is preferably 1 m/min to 15 m/min.

A film having high heat resistance can be obtained by making the surface temperature of the cooling roller to be 30°C or higher. In addition, the film can be taken up while inhibiting blocking by making the surface temperature of the cooling roller to be 75°C or lower.

The film of the present invention is produced by contacting a melt extrudate with a cooling roller. A film having two or more layers containing the film of the present invention and another film may also be produced. In such cases, the film of the present invention may be contacted directly with the cooling roller with the film of the present invention on the side of the cooling roller, or the film of the present invention may be contacted indirectly with the cooling roller through the other film with the other film on the side of the cooling roller.

In addition, in a method for forming the film of the present invention by clamping a melt extrudate between a plurality of cooling rollers, the melt extrudate is preferably clamped in a state in which it is substantially free of a bank (resin-rich area) and then subjected to surface transfer without being substantially rolled.

In the case of forming a film without forming a bank, since surface transfer proceeds without the melt extrudate being rolled during the course of cooling, heat shrinkage can be reduced in a film formed according to this method.

Furthermore, in the case of forming a film by clamping a melt extrudate between a plurality of cooling rollers, by shaping the surface of at least one of the cooling rollers by embossing or mat processing, that shape can be transferred to one or both surfaces of the film.

### <Laminated Film or Sheet>

A film obtained according to the production method of the present invention may also be in the form of a laminated film or sheet by further laminating a thermoplastic resin layer.

A known thermoplastic resin can be used for the material that composes the thermoplastic resin layer, and examples thereof include acrylic resins; ABS resins (acrylonitrile-butadiene-styrene copolymers); AS resins (acrylonitrile-styrene copolymers); polyvinyl chloride resins; polyolefin resins such as polyethylene, polypropylene, polybutene or polymethylpentene; polyolefin copolymers such as ethylene-vinyl acetate copolymers and saponification products thereof, or ethylene-methacrylic acid ester copolymers; polyester resins such as polyethylene terephthalate, polybutylene terephthalate, polyethylene naphthalate, polyarylates or polycarbonates; polyamide resins such as Nylon 6, Nylon 6,6, Nylon 6,10 or Nylon 12; polystyrene resins; cellulose derivatives such as cellulose acetate or nitrocellulose; fluororesins such as polyvinyl fluoride, polyvinylidene fluoride, polytetrafluoroethylene or ethylene-tetrafluoroethylene copolymer, and copolymers, mixtures, complexes and laminates of two types or three or more types selected therefrom.

The material that composes the thermoplastic resin layer may incorporate an ordinary compounding agent as necessary, examples of which include stabilizers, antioxidants, lubricants, processing assistants, plasticizers, impact agents, foaming agents, fillers, antibacterial agents, anti-mold agents, release agents, antistatic agents, colorants, ultraviolet absorbers, photostabilizers, heat stabilizers and flame retardants.

The thickness of the thermoplastic resin layer may be suitably determined as necessary, and normally is preferably about 1 µm to 500 µm. The thermoplastic resin layer has a thickness to a degree that the appearance of the film has a completely smooth surface while allowing surface defects in the base material to be absorbed.

Examples of methods for obtaining a laminated film or sheet include known methods such as co-extrusion, coating, heat lamination, dry lamination, wet lamination or hot melt lamination. In addition, a film and a thermoplastic resin layer can be laminated by extrusion lamination.

### Examples

Although the following provides an explanation of the present invention through examples thereof, the present invention is not limited to these examples.

Furthermore, the terms "parts" and "%" in the examples refer to "parts by weight" and "% by weight".

### [Evaluation Methods]

Examples and comparative examples were respectively evaluated according to the methods indicated below.

### (Evaluation of Resin Composition)

### (1) Molecular Weight and Molecular Weight Distribution

Weight average molecular weight (Mw) and number average molecular weight (Mn) were evaluated under the following conditions using gel permeation chromatography (Model HLC-8220, trade name, Tosoh Corp.).
Column: TSK GUARD COLUMN SUPER HZ-L (4.6 mm × 35 mm) and two TSK-GEL SUPER HZM-N columns (6.0 mm × 150 mm) connected in series
Eluent: Tetrahydrofuran
Measuring temperature: 40°C
Flow rate: 0.6 mL/min

Furthermore, Mw and Mn were determined using four types of polymethyl methacrylate standards manufactured by Polymer Laboratories Ltd. having peak top molecular weights (Mp) of 141,500, 55,600, 10,290 and 1,590.

### (2) Melt Mass Flow Rate

A sample was filled into a cylinder held at 200°C and further held for 3 minutes at that temperature in accordance with JIS K7210 followed by pressing down on the sample by applying a load of 5 kg and then collecting and weighing the sample to measure the melt mass flow rate (MFR) thereof. Measurements were repeated three times followed by determining the average value thereof.

### (Film Evaluation)

### (3) Transmittance and Haze

Haze and total light transmittance were measured in accordance with JIS K7136 using a haze meter (NHD2000, Nippon Denshoku Industries Co., Ltd.). Three measurements were carried out on a single sample followed by determining the average value thereof.

### (4) Crystal Melting Enthalpy and Melting Point

The melting enthalpy and melting point of the resin compositions were measured in accordance with JIS K7121 using a differential scanning calorimetry system (DSC6200, trade name, Hitachi High-Technologies Corp.).

The measurement samples were prepared by slicing the resin compositions into thin sections. The samples were subjected to measurement pretreatment consisting of heating from 30°C to 200°C at the rate of 10°C/min and holding at 200°C for 10 minutes followed by cooling in the same manner to 30°C at the rate of 10°C/min. Measurements were began following pretreatment, and melting point was determined from the peak top value of the crystal melting peak observed during the course of raising the temperature from 30°C to 200°C at the rate of 10°C/min. In addition, melting enthalpy was determined from the area of the crystal melting peak.

### (5) Tensile Test

A tensile test was carried out with the RTC-1250A Tensilon Universal Tester (Orientec Co., Ltd.) with reference to JIS K7127 using a dumbbell-shaped test piece stamped out of the film in the MD direction. Testing was carried out at a room temperature of 23°C and testing speed of 20 mm/min, and rupture elongation, elastic modulus and yield stress were determined from a stress-strain curve at that time.

### (6) Tear Test

A tensile test was carried out with the RTC-1250A Tensilon Universal Tester (Orientec Co., Ltd.) with reference to JIS K7128-3 a right angle-shaped test piece stamped out of the film in the MD direction. Testing was carried out at a room temperature of 23°C and testing speed of 200 mm/min, and tear strength and tear elongation were determined. Five pieces were tested per sample followed by determination of the average value thereof.

### (7) Bending Whitening Test

The appearance of the film was evaluated after manually bending the end of the film by 180°. The film was then evaluated visually for the occurrence of whitening along the crease.

### (8) Surface Roughness

Surface roughness of the film was measured in the AFM mode using a scanning probe microscope (SPA400, trade name, Hitachi High-Technologies Corp.). The measuring range covered a square area measuring 100 µm × 100 µm, and arithmetic average roughness Ra was determined with reference to the specifications of JIS B0601 from a roughness curve of a diagonal cross-section of the measured area and used as an indicator of surface roughness.

### <Production Example 1>

### [Dispersant]

61.6 parts of a 17% aqueous potassium oxide solution, 19.1 parts of methyl methacrylate (Mitsubishi Rayon Co., Ltd., to apply similarly hereinafter) and 19.3 parts of deionized water were charged into a reaction vessel equipped with a stirrer, condenser tube and thermometer and having a volume of 1200 L. Next, the liquid inside the reaction vessel was stirred at room temperature, and after confirming an exothermic peak, the liquid was additionally stirred for 4 hours. Subsequently, the reaction liquid inside the reaction vessel was allowed to cool to room temperature to obtain an aqueous potassium methacrylate solution.

Next, 900 parts of deionized water, 60 parts of sodium 2-(methacryloyloxy)ethanesulfonate (Acrylester SEM-Na, trade name, Mitsubishi Rayon Co., Ltd.), 10 parts of the aforementioned aqueous potassium methacrylate solution and 12 parts of methyl methacrylate were placed in a reaction vessel equipped with a stirrer, condenser tube and thermometer and having a volume of 1050 L followed by heating to 50°C while replacing the air inside the reaction vessel with nitrogen. Into the reaction vessel, 0.08 parts of a polymerization initiator in the form of 2,2'-azobis(2-methylpropionamidine) dihydrochloride (V-50, trade name, Wako Pure Chemical Industries, Ltd.) were added followed by further heating to 60°C. Following heating, methyl methacrylate was continuously added dropwise for 75 minutes at the rate of 0.24 parts/min using a dropping pump. After holding the reaction liquid at 60°C for 6 hours, the reaction liquid was allowed to cool to room temperature to obtain a transparent aqueous solution in the form of a dispersant having a solid content of 10%.

### <Production Example 2>

### [Macromonomer]

### (Cobalt Complex Synthesis)

2.00 g (8.03mmol) of cobalt (II) acetate tetrahydrate (Wako Special Grade, Wako Pure Chemical Industries, Ltd.), 3.86 g (16.1 mmol) of diphenyl glyoxime (EP Grade, Tokyo Chemical Industry Co., Ltd.) and 100 ml of diethyl ether deoxygenated by preliminary bubbling with nitrogen were placed in a synthesis apparatus equipped with a stirring apparatus in a nitrogen atmosphere followed by stirring for 2 hours at room temperature .

Next, 20 ml of boron trifluoride diethyl ether complex (EP Grade, Tokyo Chemical Industries Co., Ltd.) were added followed by additionally stirring for 6 hours. The resulting product was filtered, and the solid was washed with diethyl ether and then vacuum-dried for 12 hours at 20°C to obtain 5.02 g (7.93 mmol, yield: 99%) of cobalt complex in the form of a brown solid.

### (Macromonomer Synthesis)

145 parts of deionized water, 0.1 parts of sodium sulfate (Na₂SO₄) and 0.26 parts of the dispersant produced in Production Example 1 (solid content: 10%) were placed in a polymerization apparatus equipped with a stirrer, condenser tube and thermometer and stirred to obtain a homogeneous aqueous solution. Next, 95 parts of methyl methacrylate (MMA), 5 parts of methyl acrylate (MA) (Methyl Acrylate, trade name, Mitsubishi Chemical Corp.), 0.0016 parts of the cobalt complex produced according to the aforementioned method and 0.1 parts of Perocta O (1,1,3,3-tetramethylbutylperoxy-2-ethylhexanoate, trade name, NOF Corp.) were added to obtain an aqueous dispersion. Next, the inside of the polymerization apparatus was replaced with nitrogen and the aqueous dispersion was heated to 80°C followed by holding at that temperature for 4 hours and then heating to 92°C and holding for 2 hours. Subsequently, the reaction liquid was allowed to cool to 40°C to obtain an aqueous suspension of a macromonomer. This aqueous suspension was then filtered with a filter cloth, and the filtrate was washed with deionized water followed by drying for 16 hours at 40°C to obtain a macromonomer. As a result of analyzing by GPC, the Mw of the macromonomer was 27,000, Mn was 14,000 and molecular weight distribution (PDI) was 1.9.

The results are shown in Table 1.

**[Table 1]**

| | Composition (parts by weight) | | Molecular Weight | |
|---|---|---|---|---|
| | MMA | MA | Mw | Mn |
| Macromonomer | 95 | 5 | 27,000 | 14,000 |

### <Production Example 3>

### (Polymer Y1)

An aqueous medium for suspension was prepared by mixing 145 parts of deionized water, 0.1 parts of sodium sulfate and 0.26 parts of the dispersant produced in Production Example 1.

40 parts of a monomer that forms domain (y1) in which polymer X is compatible in the form of the macromonomer synthesized in Production Example 2 (abbreviation as "MM"), 36 parts of a monomer that forms domain (y2) in which polymer X is incompatible in the form of n-butyl acrylate (trade name, Mitsubishi Chemical Corp.) (abbreviation as "BA"), 24 parts of methyl methacrylate and 0.1 parts of 1-octanethiol were mixed in a separable flask equipped with a condenser tube followed by heating to 50°C while stirring to obtain a raw material syrup. After allowing the raw material syrup to cool to 40°C or lower, 0.3 parts of AMBN (2,2'-azobis(2-methylbutyronitrile), trade name, Otsuka Chemical Co., Ltd.) were dissolved in the raw material syrup to obtain a syrup.

Next, after adding the aqueous medium for suspension to the syrup, the stirring speed was increased while replacing the atmosphere within the separable flask with nitrogen by bubbling nitrogen there through to obtain a syrup dispersion.

The syrup dispersion was heated to 75°C and the external temperature of the separable flask was maintained until the peak heat of polymerization appeared. After the peak heat of polymerization appeared and the syrup dispersion reached 75°C, the syrup dispersion was heated to 85°C and held at that temperature for 30 minutes to complete polymerization and obtain a suspension.

After allowing the suspension to cool to 40°C or lower, the suspension was filtered with a filter cloth and the filtrate was washed with deionized water and dried for 16 hours at 40°C to obtain a copolymer in the form of polymer Y1. Mw of polymer Y1 was 248,000, Mn was 52,000 and molecular weight distribution (PDI) was 4.8.

Pellets of polymer Y1 obtained according to the procedure described above were preliminarily dried overnight at 50°C followed by forming into a film with a φ30 mm single-screw extruder (GM Engineering Inc.) equipped with a T-die having a width of 150 mm at an extrusion temperature of 180°C to 200°C, T-die temperature of 200°C and the temperature of a single cooling roller of 40°C to obtain a film having a thickness of 50 µm.

The results of optical testing of the film are shown in Table 2.

**[Table 2]**

| | | | Polymer Y1 | Polymer Y2 | Polymer Y3 | Polymer Y4 comparative |
|---|---|---|---|---|---|---|
| Polymer Y | Compatible domain (y1) | MM | 40 | 40 | 40 | 40 |
| | Incompatible domain (y2) | MMA | 24 | 24 | 24 | 24 |
| | | BA | 36 | 36 | 36 | 36 |
| | | 1-octanethiol | 0.1 | 0.07 | 0.05 | 0 |
| | Mw | | 248,000 | 664,000 | 837,000 | 1,501,000 |
| | Mn | | 52,000 | 66,000 | 58,000 | 61,000 |
| | PDI | | 4.8 | 10.1 | 14.4 | 24.7 |
| Film Optical Performance | Total transmittance (%) | | 92 | 92 | 92 | 92 |
| | Haze (%) | | 1 | 2 | 6 | 15 |

### <Production Examples 4 to 6>

### [Polymers Y2, Y3 and Y4]

Polymers Y2, Y3 and Y4 were each obtained in the same manner as Production Example 3 with the exception of using the amounts of 1-octanethiol shown in Table 2.

In addition, films of polymers Y2, Y3 and Y4 having a thickness of 50 µm were each obtained in the same manner as Production Example 3. The values of Mw, Mn and PDI of Polymers Y2, Y3 and Y4 along with results of optical testing of the resulting films are shown in Table 2.

Based on the results shown in Table 2, in the films of polymers Y1 to Y4, the haze values of the films were determined to increase as the molecular weight distribution (PDI) became larger. This is thought to be due to thermal relaxation becoming slightly uneven as PDI became larger. In other words, as PDI becomes larger, minute surface irregularities appear more easily thereby resulting in a greater likelihood of poor haze values. If polymer Y is used having a high haze value, the haze value of the resulting film also increases when formed into a film by mixing with polymer X. Consequently, the molecular weight distribution of polymer Y was determined to be unsuitable if larger than the range of the present invention.

### <Production Example 6>

### [Random Copolymer (Comparative Example Y)]

145 parts of deionized water, 0.1 parts of sodium sulfate (Na₂SO₄) and 0.26 parts of the dispersant (solid content: 10%) produced in Production Example 1 were placed in a polymerization apparatus equipped with a stirrer, condenser tube and thermometer followed by stirring to obtain a homogeneous aqueous solution. Next, 36 parts of n-butyl acrylate, 64 parts of methyl methacrylate and 0.1 parts of 1-octanethiol were mixed followed by the addition of 0.5 parts of a polymerization initiator in the form of AMBN and stirring to obtain an aqueous dispersion.

Next, the inside of the polymerization apparatus was replaced with nitrogen and after heating the aqueous dispersion to 75°C, the external temperature of the separable flask was maintained until the peak heat of polymerization appeared. After the peak heat of polymerization appeared, the reaction liquid was heated to 85°C when the reaction liquid reached 75°C followed by holding at that temperature for 30 minutes to complete polymerization and obtain an aqueous suspension. This aqueous suspension was filtered with a filter cloth and the precipitate was washed with deionized water followed by drying for 16 hours at 40°C to obtain a random copolymer (Comparative Example Y).

When analyzed by GPC, Mw of the random copolymer (Comparative Example Y) was 250,000, Mn was 94,000 and molecular weight distribution (PDI) was 2.7. The results are shown in Table 3.

The melt flow rates of beads of the polymer Y1 obtained in Production Example 3 and the random copolymer obtained in Production Example 6 were each measured at a temperature of 200°C and load of 5 kg. The results are shown in Table 3.

**[Table 3]**

| | | Polymer Y1 | Random Copolymer (Comparative Example Y) |
|---|---|---|---|
| Compatible domain (y1) | MM | 40 | 0 |
| Incompatible domain (y2) | MMA | 24 | 64 |
| | BA | 36 | 36 |
| | 1-octanethiol | 0.1 | 0.1 |
| Mw | | 248,000 | 250,000 |
| Mn | | 52,000 | 94,000 |
| PDI | | 4.8 | 2.7 |
| MFR (g/10 min) | | 59 | 17 |

Based on the results shown in Table 3, although the ratio of BA and Mw are the same in polymer Y1 and the random copolymer (Comparative Example Y), polymer Y1 having a larger PDI was determined to have a higher value for MFR and greater fluidity.

On the basis thereof, as a result of having the composition of the present invention, polymer Y was determined to be able to ensure favorable fluidity for molding.

### <Example 1>

### [Production of Resin Composition]

After preliminarily drying overnight 30 parts of polymer X in the form of PVDF (Kynar 720, trade name, Arkema Inc.) and 70 parts of polymer Y in the form of the polymer Y1 produced in Production Example 3 and dry blending, the mixture was extruded with a φ30 mm twin-screw kneader extruder (Werner & Pfleiderer Corp.) at a maximum temperature of 220°C to obtain a molded material (resin composition) in the form of pellets.

The PVDF used (Kynar 720, trade name, Arkema Inc.) is a homopolymer composed of vinylidene fluoride units having a crystalline melting point of 169°C and weight average molecular weight of 257,000.

### [Production of Film]

After preliminarily drying the pellets obtained using the aforementioned procedure overnight followed by forming into a film with a φ30 mm single-screw extruder (GM Engineering Inc.) equipped with a T-die having a width of 150 mm at an extrusion temperature of 180°C to 200°C, T-die temperature of 200°C and temperature of a single cooling roller of 40°C to obtain a film having a thickness of 130 µm. The surface roughness Ra of the resulting extruded film was 0.069 µm.

The results of a tensile test, tear test and optical test along with the results of differential thermal analysis and a whitening test carried out on the film are shown in Table 4.

**[Table 4]**

| | | | MM Copolymer/PVDI | | | | | MM Copolymer | PVDF | PMMA/PVDF | | Random Copolymer/PVDF |
|---|---|---|---|---|---|---|---|---|---|---|---|---|
| | | | Ex.1 | Ex.2 | Ex.3 | Ex.4 | Ex.5 | Comp.Ex. 1 | Comp. Ex.2 | Comp. Ex.3 | Comp. Ex.4 | Comp.Ex.5 |
| Resin Composition | Polymer X (PVDF) | Parts by wt. | 30 | 40 | 50 | 70 | 40 | 0 | 100 | 50 | 70 | 40 |
| | Polymer Y or Comp. Ex. Y | Type | Polymer Y1 | Polymer Y1 | Polymer Y1 | Polymer Y1 | Polymer Y2 | Polymer Y1 | -- | -- | -- | Random copolymer (Comp. Ex. Y) |
| | | Parts by wt. | 70 | 60 | 50 | 30 | 60 | 100 | 0 | 0 | 0 | 60 |
| | | Mw | 248,000 | 248,000 | 248,000 | 248,000 | 664,000 | 248,000 | -- | -- | -- | 250,000 |
| | | PDI | 4.8 | 4.8 | 4.8 | 4.8 | 10.1 | 4.8 | -- | -- | -- | 2.8 |
| | Other (PMMA) | Parts by wt. | 0 | 0 | 0 | 0 | 0 | 0 | 0 | 50 | 30 | 0 |
| Tensile Test | Elastic modulus | MPa | 870 | 1021 | 805 | 1380 | 617 | 500 | 1285 | 2987 | 2344 | 1720 |
| | Yield stress | MPa | 12 | 17 | 14 | 19 | 8 | 10 | 41 | 44 | 31 | 26 |
| | Rupture elongation | % | 184 | 221 | 256 | 264 | 277 | 98 | 307 | 10 | 259 | 179 |
| Tear Test | Tear strength | N/mm | 86 | 107 | 120 | 166 | 71 | 57 | 344 | 200 | 137 | 107 |
| | Tear elongation | % | 38 | 32 | 44 | 60 | 60 | 28 | 40 | 18 | 30 | 24 |
| Optical Performance | Total transmittance | % | 91 | 92 | 93 | 93 | 92 | 92 | 93 | 93 | 93 | 92 |
| | Haze | % | 7 | 4 | 4 | 4 | 4 | 2 | 29 | 1 | 2 | 11 |
| Differential thermal analysis | Melting point | °C | 156 | 160 | 162 | 168 | 160 | -- | 168 | 154 | 164 | 160 |
| | Melting enthalpy | J/g | 9 | 17 | 23 | 29 | 17 | -- | 46 | 3 | 27 | 17 |
| Bending whitening | O: Absent | | ○ | ○ | ○ | ○ | ○ | ○ | × | ○ | ○ | ○ |
| | X: Present | | | | | | | | | | | |

### <Examples 2 to 5 and Comparative Examples 1 and 2>

Resin compositions and films were obtained in the same manner as Example 1 with the exception of using the polymer X and the polymer Y shown in Table 4.

The results of evaluating the films are shown in Table 4.

### <Comparative Examples 3 and 4>

Films were obtained in the same manner as Example 1 with the exception of producing resin compositions by using the polymer X in the amounts shown in Table 4 and using polymethyl methacrylate (Acrypet VH001, trade name, Mitsubishi Rayon Co. , Ltd.) . The results of evaluating the films are shown in Table 4.

### <Comparative Example 5>

A film was obtained in the same manner as Example 1 with the exception of producing a resin composition by using polymer X in the amount shown in Table 4 and using a random copolymer (Comparative Example Y). The results of evaluating the film are shown in Table 4.

According to Examples 1 to 5 and Comparative Example 1, films composed of polymer X and polymer Y demonstrated remarkably superior elastic modulus, rupture elongation and tear strength in comparison with film composed of polymer Y alone.

In addition, based on the results for Examples 1 to 5 and Comparative Example 2, films composed of polymer X and polymer Y did not exhibit the occurrence of whitening during bending in comparison with film composed of polymer X alone. Moreover, since films composed of polymer X and polymer Y have a smaller crystal size, these films demonstrate low haze and superior transparency. Furthermore, the crystal melting enthalpy in the case of polymer X alone as in Comparative Example 2 was 46 J/g. Multiplying the weight fraction of polymer X contained in Examples 1 to 5, such as a value of 0.50 since the weight fraction is 50% by weight in Example 3, by this value yields a crystal melting enthalpy of 23 J/g, which agrees with the measured values. On the basis thereof, in films composed of polymer X and polymer Y, crystallization proceeds with an efficiency that is comparable to that of polymer X alone.

As can be understood from Comparative Examples 3 and 4, in the case of using PMMA, a film having superior processability cannot be obtained due to the excessively high elastic modulus thereof. In addition, due to the value of crystal melting enthalpy, crystallization remains inadequate as a result of PMMA being highly compatible with polymer X. For example, although polymer X is contained at 50% by weight in Comparative Example 3, the measured crystal melting enthalpy was 3 J/g, thereby demonstrating a lack of crystallinity. Although the resulting film has low haze and appears to have superior transparency due to this lack of crystallinity, since crystallization proceeds as a result of heating or with the passage of time, haze ends up increasing and transparency is easily impaired.

As can be understood from Comparative Example 5, in a film composed of a random copolymer (Comparative Example Y) and polymer X, haze increases due to increased crystal size. In addition, elastic modulus of the film is high and only a hard film is obtainable.

As has been indicated above, mixing the polymer X and the polymer Y at a prescribed ratio allows the obtaining of a film that is provided with the proper balance of transparency and crystallinity as well as tear strength and flexibility. In addition, the film is resistant to whitening when bent and since crystallization proceeds easily during molding, it also has the characteristic of being resistant to whitening.

### INDUSTRIAL APPLICABILITY

The film of the present invention can be preferably used as a design film, an agricultural film, automotive film, exterior film, building interior film or packaging material and the like.

Applications of the film of the present invention include applications such as overlay films, laminated films or media printing films; automotive exterior applications such as weather stripping, bumpers, bumper guards, side mudguards, body panels, spoilers, front grilles, strut mounts, hubcaps, center pillars, door mirrors, hood ornaments, side moldings, door moldings, window moldings, windows, headlamp covers, tail lamp covers or windshield parts; automotive interior applications such as instrument panels, console boxes, gauge covers, door lock bezels, steering wheels, power window switch bases, center clusters or dashboards; applications such as the front panels, buttons, emblems or surface decorative materials of AV equipment and furniture products; applications such as housings, display windows or buttons of cellular telephones; furniture exterior materials; building interior materials such as walls, ceilings or floors; building exterior materials such as siding and other exterior walls, fences, rooves, gates or bargeboards; surface decorative material applications for furniture such as window frames, doors, railings, door sills and lintels; various types of displays; optical applications such as Fresnel lenses, polarizing films, polarizer protective films, phase difference films, light scattering films, viewing angle widening films, reflective films, anti-reflective films, anti-glare films, brightness enhancing films, prism sheets, microlens arrays, touch panel conductive films, waveguide films or electronic paper films; interior and exterior applications for various types of vehicles other than automobiles such as the window glass, trains, aircraft or marine vessels; various types of packaging containers and packaging materials such as bottles, cosmetic containers or accessory cases; films for various other applications such as contest gifts, accessories and other miscellaneous goods; as well as solar cell surface protective films, solar cell sealing films, solar cell back protective films, solar cell substrate films, agricultural greenhouses, protective films for expressway sound insulating boards and protective films for the outermost surfaces of traffic signs.

## Claims

1. A resin composition containing 15% by weight to 80% by weight of polymer X and 20% by weight to 85% by weight of polymer Y based on the total weight of polymers contained in the resin composition, wherein
the polymer X is a polyvinylidene fluoride resin; and,
the polymer Y is a copolymer having a domain (y1) compatible with the polymer X and a domain (y2) incompatible with the polymer X, having a molecular weight distribution of 3.0 to 16.0, wherein the weight average molecular weight of the polymer Y determined by gel permeation chromatography as polymethyl methacrylate is 50,000 to 750,000,
wherein the polymer (Y) is only composed of a (meth)acrylate monomer unit, and
wherein the molecular weight distribution is determined from weight average molecular weight and number average molecular weight measured by gel permeation chromatography as polymethyl methacrylate.

2. The resin composition according to claim 1, wherein the domain (y1) or the domain (y2) contains a macromonomeric unit.

3. The resin composition according to claim 1 or 2, wherein the molecular weight distribution of the polymer Y is 3.0 to 11.0.

4. The resin composition according to any one of claims 1 to 3, wherein the polymer X is polyvinylidene fluoride.

5. A film comprising the resin composition according to any one of claims 1 to 4.

6. The film according to claim 5, wherein the haze value thereof determined by measuring in accordance with JIS K7136 is 0% to 10%.

7. The film according to claim 5 or 6, wherein the elastic modulus measured at 23°C and a testing speed of 20 mm/min with reference to JIS K7127 is 1 MPa to 1600 MPa.

8. The film according to claim 7, wherein the elastic modulus measured at 23°C and a testing speed of 20 mm/min with reference to JIS K7127 is 1 MPa to 1300 MPa.

9. The film according to any one of claims 5 to 7, wherein the tear strength measured at a testing speed of 200 mm/min in accordance with JIS K7128-3 is 70 N/mm or more.

10. The film according to claim 9, wherein the tear strength measured at a testing speed of 200 mm/min in accordance with JIS K7128-3 is 80 N/mm or more.

11. A film comprising a resin composition according to any one of claims 1 to 4, which satisfies the following (1) to (4):
(1) elastic modulus measured at 23°C and a testing speed of 20 mm/min with reference to JIS K7127 is 1 MPa to 1300 MPa;
(2) tear strength measured at a testing speed of 200 mm/min in accordance with JIS K7128-3 is 70 N/mm or more;
(3) haze value measured in accordance with JIS K7136 is 0% to 10%; and,
(4) resin composition contains 20% by weight or more of a polymer composed of a (meth)acrylate monomer unit.

12. The film according to claim 11, comprising a resin composition containing 40% by weight or more of a polymer composed of a (meth)acrylate monomer unit.

## Patentansprüche

1. Harzzusammensetzung, enthaltend 15 Gew.-% bis 80 Gew.-% an Polymer X und 20 Gew.-% bis 85 Gew.-% an Polymer Y, basierend auf dem Gesamtgewicht der in der Harzzusammensetzung enthaltenen Polymeren, wobei
das Polymer X ein Polyvinylidenfluoridharz ist; und
das Polymer Y ein Copolymer ist, mit einer Domäne (y1), die mit dem Polymer Y kompatibel ist, und einer Domäne (y2), die mit dem Polymer X inkompatibel ist, mit einer Molekulargewichtsverteilung von 3,0 bis 16,0, wobei das gewichtsmittlere Molekulargewicht des Polymers Y, bestimmt durch Gelpermeationschromatographie als Polymethylmethacrylat, 50.000 bis 750.000 beträgt,
wobei das Polymer Y nur aus einer (Meth)acrylatmonomereinheit zusammengesetzt ist, und
wobei die Molekulargewichtsverteilung bestimmt wird aus dem gewichtsmittleren Molekulargewicht und dem zahlenmittleren Molekulargewicht, gemessen durch Gelpermeationschromatographie als Polymethylmethacrylat.

2. Harzzusammensetzung nach Anspruch 1, wobei die Domäne (y1) oder die Domäne (y2) eine Makromonomereinheit enthält.

3. Harzzusammensetzung nach Anspruch 1 oder 2, wobei die Molekulargewichtsverteilung des Polymers Y 3,0 bis 11,0 beträgt.

4. Harzzusammensetzung nach irgendeinem der Ansprüche 1 bis 3, wobei das Polymer X Polyvinylidenfluorid ist.

5. Film, umfassend die Harzzusammensetzung nach irgendeinem der Ansprüche 1 bis 4.

6. Film nach Anspruch 5, wobei der Trübungswert hiervon, bestimmt durch Messung gemäß JIS K7136, 0% bis 10% beträgt.

7. Film nach Anspruch 5 oder 6, wobei der Elastizitätsmodul, gemessen bei 23°C und einer Prüfgeschwindigkeit von 20 mm/min mit Bezug auf JIS K7127, 1 MPa bis 1600 MPa beträgt.

8. Film nach Anspruch 7, wobei der Elastizitätsmodul, gemessen bei 23°C und einer Prüfgeschwindigkeit von 20 mm/min mit Bezug auf JIS K7127, 1 MPa bis 1300 MPa beträgt.

9. Film nach irgendeinem der Ansprüche 5 bis 7, wobei die Reißfestigkeit, gemessen bei einer Prüfgeschwindigkeit von 200 mm/min gemäß JIS K7128-3, 70 N/mm oder mehr beträgt.

10. Film nach Anspruch 9, wobei die Reißfestigkeit, gemessen bei einer Prüfgeschwindigkeit von 200 mm/min gemäß JIS K7128-3, 80 N/mm oder mehr beträgt.

11. Film, umfassend eine Harzzusammensetzung nach irgendeinem der Ansprüche 1 bis 4, welcher den folgenden (1) bis (4) genügt:
(1) Elastizitätsmodul, gemessen bei 23°C und einer Prüfgeschwindigkeit von 20
mm/min mit Bezug auf JIS K7127, beträgt 1 MPa bis 1300 MPa;
(2) Reißfestigkeit, gemessen bei einer Prüfgeschwindigkeit von 200 mm/min gemäß JIS K7128-3, beträgt 70 N/mm oder mehr;
(3) Trübungswert, gemessen gemäß JIS K7136, beträgt 0% bis 10%; und
(4) Harzzusammensetzung enthält 20 Gew.-% oder mehr eines Polymers, zusammengesetzt aus einer (Meth)acrylatmonomereinheit.

12. Film nach Anspruch 11, umfassend eine Harzzusammensetzung, enthaltend 40 Gew.-% oder mehr eines Polymers, zusammengesetzt aus einer (Meth)acrylatmonomereinheit.

## Revendications

1. Une composition de résine contenant de 15% en poids à 80% en poids du polymère X et de 20% en poids à 85% en poids du polymère Y par rapport au poids total des polymères contenus dans la composition de résine, dans laquelle
le polymère X est une résine de poly(fluorure de vinylidène); et
le polymère Y est un copolymère ayant un domaine (y1) compatible avec le polymère X et un domaine (y2) incompatible avec le polymère X, ayant une distribution de poids moléculaire de 3,0 à 16,0, dans laquelle le poids moléculaire moyen en poids du polymère Y déterminé par chromatographie sur perméation de gel sous forme de polyméthacrylate de méthyle est de 50.000 à 750.000,
dans laquelle le polymère (Y) est uniquement composé d'une unité monomère de (méth)acrylate, et
dans laquelle la distribution de poids moléculaire est déterminée à partir du poids moléculaire moyen en poids et du poids moléculaire moyen en nombre mesuré par chromatographie sur perméation de gel sous forme de polyméthacrylate de méthyle.

2. La composition de résine selon la revendication 1, dans laquelle le domaine (y1) ou le domaine (y2) contient une unité de macromonomère.

3. La composition de résine selon la revendication 1 ou 2, dans laquelle la distribution de masse moléculaire du polymère Y est de 3,0 à 11,0.

4. La composition de résine selon l'une quelconque des revendications 1 à 3, dans laquelle le polymère X est le poly(fluorure de vinylidène).

5. Un film comprenant la composition de résine selon l'une quelconque des revendications 1 à 4.

6. Le film selon la revendication 5, dans lequel sa valeur de voile mesuré conformément à JIS K7136 est de 0% à 10%.

7. Le film selon la revendication 5 ou 6, dans lequel le module d'élasticité mesuré conformément à JIS K7127 à 23° C et une vitesse d'essai de 20 mm/min est de 1 MPa à 1600 MPa.

8. Le film selon la revendication 7, dans lequel le module d'élasticité mesuré conformément à JIS K7127 à 23° C et une vitesse d'essai de 20 mm/min est de 1 MPa à 1300 MPa.

9. Le film selon l'une quelconque des revendications 5 à 7, dans lequel la résistance à la déchirure mesurée conformément à JIS K7128-3 à une vitesse d'essai de 200 mm/min est de 70 N/mm ou plus.

10. Le film selon la revendication 9, dans lequel la résistance à la déchirure mesurée conformément à JIS K7128-3 à une vitesse de test de 200 mm/min est de 80 N/mm ou plus.

11. Un film comprenant une composition de résine selon l'une quelconque des revendications 1 à 4, qui répond aux critères (1) à (4) suivants:
(1) le module d'élasticité mesuré à 23° C et à une vitesse d'essai de 20 mm/min est compris entre 1 MPa et 1300 MPa;
(2) la résistance à la déchirure mesurée conformément à JIS K7128-3 à une vitesse d'essai de 200 mm/min est égale ou supérieure à 70 N/mm;
(3) la valeur de voile mesurée conformément à la norme JIS K7136 est comprise entre 0% et 10%; et
(4) la composition de résine contient 20% en poids ou plus d'un polymère composé d'un motif de monomère de (méth)acrylate.

12. Le film selon la revendication 11, comprenant une composition de résine contenant 40% en poids ou plus d'un polymère composé d'un motif de monomère de (méth)acrylate.
